# FASCICULE DE BREVET EUROPEEN

(11) **EP 3 353 767 B1**
(45) Date de publication et mention de la délivrance du brevet: **17.03.2021**
(21) Numéro de dépôt: 16775585.9
(22) Date de dépôt: 22.09.2016
(51) Int. Cl.: G09C 1/00, G06F 21/87, H01L 23/00

(54) **SYSTÈME DE DÉTECTION D'INTRUSIONS PAR RECONFIGURATION**
SYSTEM ZUR ERKENNUNG VON INTRUSIONEN DURCH REKONFIGURATION
SYSTEM FOR DETECTING INTRUSIONS BY RECONFIGURATION

(30) Priorité: 22.09.2015 FR 1501959
(43) Date de publication de la demande: 01.08.2018
(73) Titulaire: Thales, 92400 Courbevoie (FR)
(72) Inventeur: SALIBA, Eric, 92622 Gennevilliers Cedex (FR); GRISAL, Olivier, 92622 Gennevilliers Cedex (FR); DUPREZ, Adrien, 92622 Gennevilliers Cedex (FR); MIQUEL, Stéphane, 92622 Gennevilliers (FR)
(74) Mandataire: Lavoix
(86) Numéro de dépôt international: PCT/EP2016/072564
(87) Numéro de publication internationale: WO 2017/050910

(56) Documents cités:
- US-A1- 2013 055 416
- US-A1- 2013 104 252
- US-B1- 7 710 286

## Description

La présente invention concerne un système de détection d'intrusions selon le préambule de la revendication 1.

La présente invention se rapporte également à un procédé associé de détection d'intrusions.

Dans le domaine de la sécurité informatique, l'un des enjeux consiste à protéger les équipements par lesquels transitent des informations sensibles. De tels équipements comprennent notamment des circuits imprimés ou des circuits intégrés. Un circuit imprimé, aussi appelé carte électronique, est un support permettant de maintenir et de relier électriquement entre eux un ensemble de composants électroniques. Un circuit intégré, aussi appelé puce électronique, est un ensemble de composants électroniques reproduisant une ou plusieurs fonctions électroniques et intégrant généralement plusieurs types de composants électroniques de base dans un volume réduit.

Les pistes d'un circuit imprimé et les connexions des composants électroniques branchés sur un tel circuit imprimé sont susceptibles de faire l'objet d'attaques physiques. De telles attaques physiques consistent, notamment, à approcher des sondes ou à brancher des électrodes sur les pistes du circuit imprimé ou sur les connexions de composants branchés sur le circuit imprimé de sorte à capturer les signaux transitant sur les pistes ou les connexions ou à injecter des signaux. Les signaux capturés sont ensuite utilisés par les attaquants pour recueillir des données sensibles. Les signaux injectés sont utilisés pour perturber les signaux échangés ou provoquer un dysfonctionnement de l'équipement.

Des attaques similaires sont susceptibles d'être réalisées sur des circuits intégrés.

De ce fait, des systèmes de protection physique sont utilisés pour protéger contre les intrusions les circuits imprimés et les circuits intégrés de tels équipements. Les systèmes de protection comprennent, par exemple, des maillages protecteurs en deux ou trois dimensions. Les maillages sont notamment formés de circuits électriques distincts formant des motifs et dont la continuité, ou l'altération, est vérifiée en faisant circuler un courant de contrôle et en détectant les pertes de courant, dues à une rupture du circuit, ou la modification de l'une des caractéristiques électriques du courant, due à une altération du circuit. Les maillages sont, par exemple, disposés au-dessus et/ou au-dessous des composants de l'équipement à protéger, tels que les pistes et les connexions d'un circuit imprimé ou les couches de silicium d'un circuit intégré. Les maillages comprennent notamment une structure et des motifs choisis de sorte à permettre la détection de tentatives d'intrusions. Lorsqu'une tentative d'intrusion est détectée, des actions de réaction sont enclenchées par le système de protection consistant, par exemple, à effacer les données sensibles de l'équipement.

Or, les attaques étant de plus en plus sophistiquées, la structure et les motifs conçus pour les maillages sont de plus en plus complexes, ce qui augmente le temps et le coût de développement des maillages.

En outre, la protection apportée par de tels maillages est susceptible d'être contournée par les attaquants après une phase de rétro-ingénierie. La rétro-ingénierie, également appelée rétro-conception, est une activité qui consiste à étudier un objet pour en déterminer le fonctionnement interne ou la méthode de fabrication.

Après rétro-ingénierie, l'attaquant a connaissance des positions et des propriétés des différents circuits électriques du maillage. L'attaquant est alors susceptible de shunter certains de ces circuits électriques et donc de les sectionner pour libérer un espace d'accès à l'équipement protégé, sans que le système de protection ne détecte l'intrusion. Il est entendu par le terme « shunter », l'action de court-circuiter un circuit électrique.

Les documents US 2013/0055416 A, US 2013/104252 A et US 7 710 286 B illustrent des exemples de dispositifs de détection d'intrusions.

Il existe donc un besoin pour un système permettant d'une part de répondre à des attaques sophistiquées sans augmenter la complexité des maillages de protection, donc leur temps et coût de développement ainsi que leur coût de production ; d'autre part de rendre inopérant pour un attaquant le court-circuit d'un ou plusieurs circuits électriques d'un maillage après rétro-ingénierie.

A cet effet, l'invention a pour objet un système de détection d'intrusions du type précité, dans lequel le système comprend, en outre, les caractéristiques de la partie caractérisante de la revendication 1.

Suivant des modes de réalisation particuliers, le système de détection d'intrusions comprend une ou plusieurs des caractéristiques des revendications 2 à 11, prises isolément ou suivant toutes les combinaisons techniquement possibles.

L'invention concerne également un procédé de détection d'intrusions selon la revendication 12.

D'autres caractéristiques et avantages de l'invention apparaitront à la lecture de la description qui suit de modes de réalisation de l'invention, donnée uniquement à titre d'exemple et en référence aux dessins qui sont :
- figure 1, une vue schématique en coupe d'un exemple d'un système de détection d'intrusions montant en section un film de détection formé d'une surface d'interconnexion, de surfaces de maillage ainsi que d'un module de configuration, d'un module de détection et d'un module de réaction,
- figure 2, une vue schématique de dessus d'une première surface de maillage du système de la figure 1,
- figure 3, une vue schématique de dessus de la surface d'interconnexion du système de la figure 1,
- figure 4, une vue schématique de dessus d'une deuxième surface de maillage du système de la figure 1,
- figure 5, une vue schématique de dessus d'un exemple d'un motif d'une cellule d'une surface de maillage de la figure 1,
- figure 6, un organigramme d'un exemple d'un procédé de détection d'intrusions utilisant une configuration dynamique des interconnexions, et
- figure 7, un organigramme d'un autre exemple d'un procédé de détection d'intrusions utilisant une configuration dynamique et une configuration statique des interconnexions.

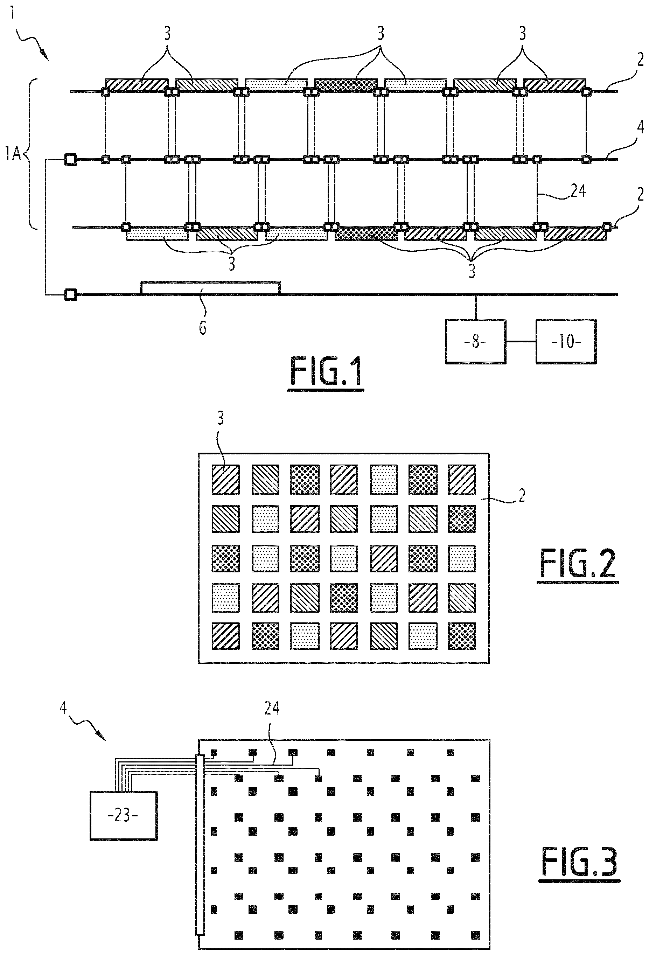

Un système 1 de détection d'intrusions est illustré sur la figure 1.

Le système 1 est destiné à protéger un équipement par lequel transitent des informations sensibles. L'équipement comprend, par exemple, un circuit imprimé ou un circuit intégré. L'équipement est, par exemple, un dispositif de chiffrement ou un équipement de transmission par lequel transitent des données cryptées telles que des données bancaires.

Le système 1 est propre à détecter des tentatives d'intrusions en provenance de l'extérieur du système 1. Les tentatives d'intrusions sont notamment des attaques physiques consistant à approcher des sondes ou à brancher des électrodes sur un circuit imprimé de l'équipement protégé par le système 1.

Le système 1 comprend un film de détection 1A propre à envelopper totalement l'équipement à protéger ou au moins à couvrir l'intégralité ou une partie des circuits imprimés et circuits intégrés de l'équipement. Le film 1A est limité à une surface plane de l'équipement et s'étend ainsi seulement en deux dimensions ou se prolonge sur au moins deux surfaces décalées angulairement et forme ainsi une surface en trois dimensions.

Le film 1A comprend au moins une surface de maillage 2, chaque surface de maillage 2 comprenant au moins deux cellules 3. Le film 1A comprend, en outre, au moins une surface 4 d'interconnexion des cellules 3 de chaque surface de maillage 2.

Le système 1 comprend également un module 6 de configuration au cours du temps des interconnexions des connecteurs 24 de la surface d'interconnexion 4. Le système 1 comprend aussi un module 8 de détection d'intrusions et un module 10 de réaction à des tentatives d'intrusions détectées par le module de détection 8.

Optionnellement, le système 1 comprend aussi un organe tel qu'un minuteur configuré pour activer le module de configuration 6 et/ou le module de détection 8.

Dans l'exemple de la figure 1, le film 1A comprend deux surfaces de maillage 2 et une surface d'interconnexion 4.

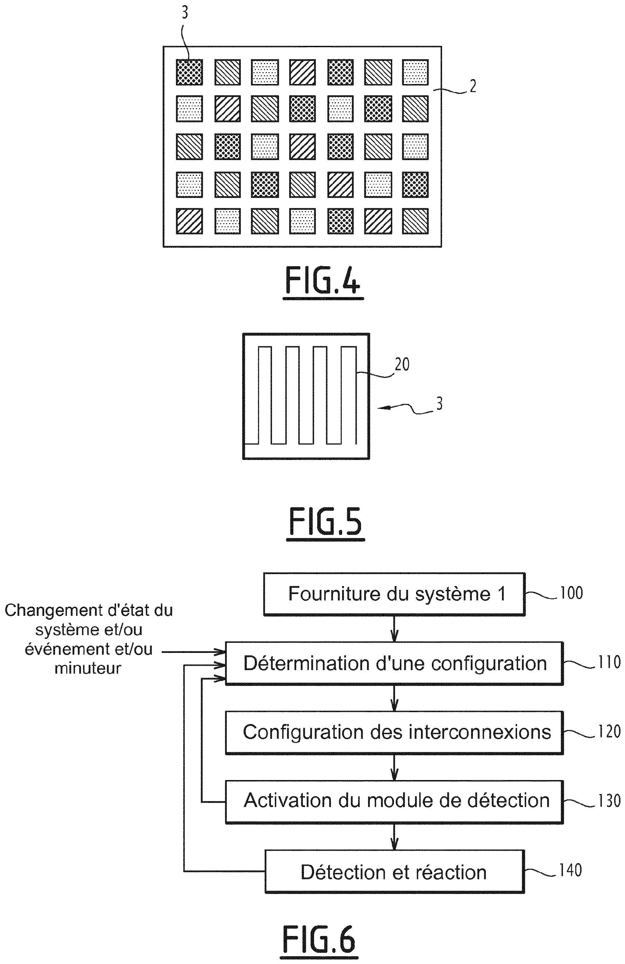

Comme illustré sur les figures 2 et 4, chaque surface de maillage 2 comprend trente-cinq cellules 3. Les cellules 3 ont, par exemple, une surface identique égale à 54 millimètres carré (mm²). En variante, les cellules 3 ont des tailles distinctes.

Les cellules 3 sont des segments continus de pistes conductrices comprenant chacune un motif géométrique 20 couvrant toute la surface de la cellule 3, comme illustré sur la figure 5. La mise bout à bout des motifs 20 via les interconnexions des connecteurs 24 forment un maillage.

Chaque motif 20 est une portion de circuit électrique continu curviligne sans croisement et dont la rupture ou l'altération d'une caractéristique électrique permet de détecter une tentative d'intrusions dans le système 1. Les motifs 20 ont, par exemple, des formes en boustrophédon telles que représentées sur la figure 5 ou des formes plus complexes, par exemple, en spirale ou labyrinthiques.

La surface d'interconnexion 4 est configurée pour relier entre elles des cellules 3 d'une même surface de maillage 2 ou des cellules 3 de surfaces de maillage 2 différentes afin de former un maillage plus ou moins complexe.

Dans l'exemple illustré sur la figure 3, la surface d'interconnexion 4 comprend un composant programmable 23 et une pluralité de connecteurs 24.

Le composant programmable 23 est, par exemple, un FPGA (acronyme anglais de *Field-Programmable Gate Array*, traduit en français par *Réseau de Portes Programmables).*

Le composant programmable 23 est propre à activer le module de configuration 6, le module de détection 8, le module de réaction 10 et optionnellement, le minuteur.

Le composant programmable 23 est également configuré pour déterminer les interconnexions des connecteurs 24 sur la surface d'interconnexion 4 et pour interconnecter les connecteurs 24 selon les interconnexions déterminées. Le composant programmable exécute, par exemple, une fonction d'évolution des interconnexions propres à faire évoluer dans le temps les interconnexions des connecteurs 24 pour chaque groupe de cellules 3 connectées.

Les connecteurs 24 sont d'une part reliés aux extrémités des motifs 20 des cellules 3. Les connecteurs 24 sont d'autre part interconnectés par le composant programmable 23 pour connecter en série des cellules 3 des surfaces de maillage 2 selon une première configuration, pour former des groupes de cellules connectées. De tels groupes de cellules connectées en série sont aussi appelées « équipotentielles ». Il peut y avoir plusieurs équipotentielles en parallèle, chacune correspondant à un groupe de cellules.

En variante, la surface d'interconnexion 4 comprend plusieurs composants programmables 23.

En variante, la surface d'interconnexion 4 comprend un microsystème électromécanique piloté par des actuateurs. Un microsystème électromécanique, aussi appelé MEMS (acronyme anglais pour *Microelectromechanical Systems*), est un microsystème comprenant un ou plusieurs éléments mécaniques et utilisant l'électricité comme source d'énergie, en vue de réaliser une fonction de capteur et/ou d'actionneur, avec au moins une structure présentant des dimensions micrométriques.

Les motifs 20 des cellules 3 de chaque groupe de cellules connectées forment un circuit électrique continu de motifs. Par exemple, les figures 2 et 4 illustrent différents circuits électriques continus de motifs, les cellules 3 d'un même circuit électrique étant représentées par un même type de hachures ou de pointillés.

Le module de configuration 6 est propre à configurer les interconnexions des connecteurs 24 selon la première configuration de la surface d'interconnexion 4.

Le module de configuration 6 est propre à reconfigurer au cours du temps les interconnexions des connecteurs 24 selon une nouvelle configuration de la surface d'interconnexion 4. Le module de configuration 6 est donc propre à modifier au cours du temps la configuration en cours de la surface d'interconnexion 4 pour obtenir une nouvelle configuration de la surface d'interconnexion 4 et à reconfigurer l'ensemble des interconnexions des connecteurs 24 selon la deuxième configuration.

Le module de configuration 6 est propre à déterminer de manière aléatoire chaque configuration parmi une pluralité de configurations de la surface d'interconnexion 4.

De préférence, chaque configuration est choisie parmi une pluralité de configurations testées et validées en usine pour éviter des erreurs de configurations ou des configurations non optimales. Dans ce cas, la détermination de chaque configuration est pseudo-aléatoire, c'est-à-dire que bien que les configurations possibles soient connues, la multiplicité des configurations ne permet pas de prévoir la configuration qui sera choisie par le module de configuration 6.

Le module de configuration 6 est, en outre, propre à modifier la configuration de la surface d'interconnexion 4 lorsqu'une tentative d'intrusion est détectée par le module de détection 8.

Dans ce cas, le module de configuration 6 est, par exemple, propre à modifier la configuration de la surface d'interconnexion 4 de sorte à augmenter le nombre de groupes de cellules connectées dans la zone de la surface de maillage 2 où une tentative d'intrusion a été détectée. Une telle augmentation du nombre de groupes de cellules et donc de circuits électriques continus dans une zone est appelée « resserrement du maillage » dans la zone. Resserrer le maillage dans une zone permet de rendre encore plus complexe le recourt à des shunts pour libérer un espace d'accès à la zone à protéger.

En variante, le module de configuration 6 est propre à accroître ou à diminuer le nombre de cellules d'un groupe sur une partie de la surface d'interconnexion 4 en fonction d'une règle prédéfinie, d'un état ou d'un événement.

En variante et/ou en complément, le module de configuration 6 est activé à des instants choisis aléatoirement, pseudo-aléatoirement ou encore périodiquement par le minuteur du système 1, ce qui rend plus difficile pour un attaquant d'anticiper la configuration de la surface d'interconnexion 4.

En variante et/ou en complément, le module de configuration 6 est propre à modifier la configuration de la surface d'interconnexion 4 de sorte à déplacer au cours du temps, sur une ou sur chaque surface de maillage 2, la zone de la surface de maillage 2 présentant le nombre de groupes de cellules connectées le plus élevé. Une zone dense en groupes de cellules et donc en circuits électriques permet, en effet, de détecter plus facilement une intrusion. En revanche, une telle zone utilise plus de ressources pour fonctionner. Le déplacement d'une telle zone permet donc d'effectuer un compromis entre finesse de détection d'une intrusion et consommation du système 1.

Lorsque la surface d'interconnexion 4 comprend le composant programmable 23, le module de configuration 6 est, par exemple, une application logicielle intégrée dans le composant programmable 23.

Lorsque la surface d'interconnexion 4 comprend un microsystème électromécanique piloté par des actuateurs, le module de configuration 6 est propre à actionner les actuateurs.

Le module de détection 8 est propre à détecter une modification d'une impédance caractéristique de chaque groupe de cellules électriquement connectées et notamment une rupture de la continuité ou une altération des circuits continus formés des groupes de cellules connectées selon la surface d'interconnexion 4. Une intrusion étant caractérisée par une rupture ou une altération, le module de détection 8 est donc propre à détecter les intrusions. Par exemple, le module de détection 8 est propre à détecter une coupure électrique par boucle sèche, émission-réception d'un signal, mesure de latence ou tout autre procédé permettant de détecter l'altération d'un circuit constitué par un groupe de cellules interconnectées.

Le module de détection 8 est configuré pour appliquer une politique de sécurité suite à la détection d'une rupture de la continuité d'un groupe de cellules connectées. La politique de sécurité comprend, par exemple, l'effacement des données sensibles de l'équipement protégé par le système 1, l'activation de tests complémentaires tels que des tests d'intégrité des surfaces de maillage 2 ou encore la reconfiguration des interconnexions des connecteurs 24 suivant une nouvelle configuration de la surface d'interconnexion 4 afin de réaliser un complément de détection.

Typiquement, le module de détection 8 est configuré pour émettre périodiquement des signaux électriques sur chaque circuit électrique, puis pour en vérifier la bonne réception. En cas d'une mauvaise réception d'un signal électrique, le module de détection 8 est propre à détecter une altération physique d'un ou plusieurs circuits électriques. Dans cet exemple, le module de configuration 6 asservit le module de détection 8 pour que le module de détection 8 connaisse les signaux qu'il est censé recevoir en réception.

En variante et/ou en complément, le module de détection 8 inclut plusieurs méthodes de détection de la rupture ou de l'altération d'un circuit et les utilise de façon combinée selon un entrelacement temporel défini, pseudo-aléatoire ou aléatoire.

Le module de détection 8 est configuré pour être activé à une fréquence régulière, au moins égale à la fréquence de reconfiguration, par le module de configuration 6, des interconnexions des connecteurs 24 de la surface d'interconnexion 4.

En variante, le module de détection 8 est activé à des instants choisis aléatoirement ou pseudo-aléatoirement par le minuteur du système 1.

Lorsque la surface d'interconnexion 4 comprend le composant programmable 23, le module de détection 8 est, par exemple, une application logicielle intégrée dans le composant programmable.

Le module de réaction 10 est connecté au module de détection 8.

Le module de réaction 10 permet d'enclencher une action de réaction en réponse à une tentative d'intrusions dans le système 1 détectée par le module de détection 8. Par exemple, le module de réaction 10 est configuré pour effacer les données sensibles présentes dans l'équipement protégé par le système 1, pour activer des tests complémentaires et/ou pour déclencher une reconfiguration des interconnexions des connecteurs 24.

Lorsque la surface d'interconnexion 4 comprend le composant programmable 23, le module de réaction 10 est, par exemple, une application logicielle intégrée dans le composant programmable.

Le minuteur est avantageusement un minuteur à faible consommation. Pour que la consommation globale reste faible, le rapport entre les périodes de réveil et de sommeil du module de configuration 6 et/ou du module de détection 8 activé par le minuteur est par exemple de l'ordre de 1 pour 1000, c'est-à-dire de 1000 microsecondes de réveil pour une seconde de sommeil, avec néanmoins des écarts entre les réveils très faibles par rapport au temps de mise en oeuvre d'une attaque.

Un procédé de détection d'intrusions à partir du système 1 de détection d'intrusions de la figure 1 va maintenant être décrit.

Initialement, le procédé de détection d'intrusions comprend une étape 100 de fourniture du système de détection d'intrusions 1 tel que décrit précédemment.

Ensuite, le procédé de détection d'intrusions comprend une étape 110 de détermination par le module de configuration 6 d'une première configuration de la surface d'interconnexion 4.

Puis, lors d'une étape 120 suivante, le module de configuration 6 réalise la configuration des interconnexions des connecteurs 24 de la surface d'interconnexion 4 selon la première configuration de la surface d'interconnexion 4 préalablement déterminée lors de l'étape 110.

Ensuite, lors de l'étape 130 suivante, le module de détection 8 est activé afin de détecter une éventuelle rupture de la continuité électrique sur chaque groupe de cellules 3 électriquement interconnectées par les connecteurs 24 selon la première configuration de la surface d'interconnexion 4. Le module de détection 8 est, par exemple, activé à un instant choisi aléatoirement par le minuteur.

Lorsque le module de détection 8 détecte une rupture de la continuité d'un circuit continu, le module de détection 8 communique, lors d'une étape 140, avec le module de réaction 10. Le module de réaction 10 effectue alors des actions de protection sur l'équipement protégé par le système 1.

Ensuite, les étapes 110 à 140 sont répétées au cours du temps. Le module de configuration 6 est, par exemple, activé à des instants choisis aléatoirement par le minuteur. La configuration de l'interconnexion des connecteurs 24 réalisée par le module de configuration 6 lors de l'étape 110 est en variante, par exemple, fonction de l'état du système ou d'un événement détecté.

Ainsi, les interconnexions entres les connecteurs 24 sont reconfigurées au cours du temps, ce qui permet d'obtenir de nouvelles configurations de la surface d'interconnexion 4 et de détecter d'éventuels shunts de plusieurs de cellules d'équipotentielles différentes.

En variante, le module de détection 8 est activé plusieurs fois entre deux configurations, par le module de configuration 6, des interconnexions des connecteurs 24 de la surface d'interconnexion 4. L'activation du module de configuration 6 est, en effet, indépendante de l'activation du module de détection 8.

Ainsi, le système 1 permet de protéger efficacement un équipement contre des attaques physiques avec un format de maillage simple et peu coûteux ne complexifiant pas les phases de développement et de fabrication du système 1. La surface d'interconnexion 4 est programmée pour se renouveler en fonction du temps, ce qui apporte un gain notable pour le niveau de protection du maillage.

En particulier, la reconfiguration au cours du temps des interconnexions des connecteurs 24 entre les cellules 3 des surfaces de maillage 2 permet de limiter les attaques par rétro-ingénierie et de rendre ainsi inopérant le recours à des shunts pour court-circuiter les circuits électriques du maillage. En outre, la connaissance acquise par un attaquant sur le système n'est que partiellement réexploitable pour la mise au point d'une attaque sur un autre système.

En outre, la surface de maillage 2 et la surface d'interconnexion 4 forment une barrière de protection physique pour l'équipement protégé par le système 1, pour le module de configuration 6 et pour le module de détection 8.

De plus, la fonction de resserrement du maillage dans des zones susceptibles d'être attaquées, permet de renforcer la protection de l'équipement à protéger.

En outre, le resserrement du maillage au niveau d'une zone d'intérêt est particulièrement utile en cas de gestion optimisée du nombre de ressources disponibles, c'est-à-dire d'optimisation du nombre d'entrées et de sorties de la surface d'interconnexion 4.

Le système 1 résout donc le problème d'augmentation de la complexité des maillages de l'état de la technique par reconfiguration des interconnexions des connecteurs 24 de la surface d'interconnexion 4 au cours du temps. La géométrie du maillage est ainsi propre à un équipement à protéger et est variable dans le temps.

La fréquence des reconfigurations, par le module de configuration 6, des interconnexions des connecteurs 24 de la surface d'interconnexion 4 est également adaptable en fonction du niveau de protection souhaité pour l'équipement ou des risques d'attaques estimés.

Le système 1 permet également de maintenir la consommation d'énergie à un niveau acceptable et de rendre la protection pérenne, même lorsque l'équipement du système 1 est alimenté par une alimentation de secours pendant une longue période.

L'homme du métier comprendra que l'invention ne se limite pas aux modes de réalisation décrits, ni aux exemples particuliers de la description.

Par exemple, en complément, le système 1 comprend un module de mesure d'une variation d'une grandeur entre au moins deux des surfaces de maillage 2 du système 1. La grandeur est, par exemple, choisie parmi une impédance, une résistance, une capacitance et une inductance. Les variations de la grandeur permettent de détecter des tentatives d'intrusions et d'enclencher alors le module de configuration 6 et/ou le module de réaction 10.

Dans un autre exemple, le système 1 comprend, en outre, au moins une surface de blindage disposée autour de la ou des surfaces de maillage 2. La surface de blindage permet, par exemple, de protéger l'équipement d'attaques chimiques ou électromagnétiques.

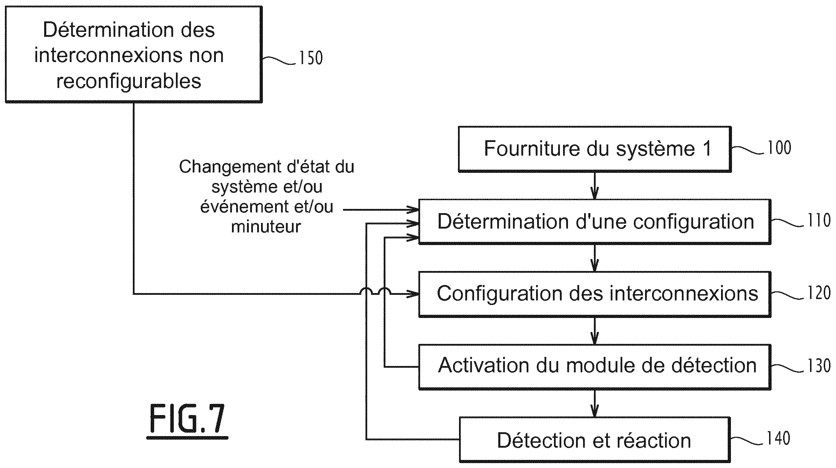

Dans encore un autre exemple, au moins un circuit électrique est formé par la connexion, non reconfigurable par le module de configuration 6, d'au moins deux cellules 3 adjacentes d'une surface de maillage 2 via un composant préalablement configuré de façon statique en usine. Un composant préalablement configuré de façon statique est un composant intégré de manière inaltérable au système 1 lors de sa fabrication. Chaque groupe de cellules connectées les unes aux autres par un composant préalablement configuré de façon statique forme une macro-cellule. Les macro-cellules présentent l'avantage de limiter le nombre des interconnexions des connecteurs 24 de la surface d'interconnexion 4. Dans ce cas, comme illustré sur la figure 7, le procédé de détection d'intrusions comprend, en outre, une étape 150 de construction en usine des interconnexions non reconfigurables formant les macro-cellules.

Dans ce dernier exemple, les interconnexions des connecteurs 24 de la surface d'interconnexion 4 sont définies statiquement pour partie pour certains groupes de cellules et dynamiquement pour d'autres.

## Revendications

1. Système (1) de détection d'intrusions, pour la protection d'un équipement par lequel transitent des informations sensibles, le système (1) comprenant :
- au moins une surface de maillage (2), chaque surface de maillage (2) comprenant au moins deux cellules (3), chaque cellule (3) comprenant un motif (20), un motif (20) étant une portion de circuit électrique continu,
- au moins une surface d'interconnexion (4) comprenant une pluralité de connecteurs (24), les connecteurs (24) étant propres à connecter entre elles des cellules (3) de la ou des surfaces de maillage (2) selon une première configuration de la surface d'interconnexion (4) pour former des groupes de cellules (3) électriquement connectées, les motifs (20) des cellules (3) de chaque groupe formant un circuit électrique continu de motifs (20),
- un module de détection (8) propre à détecter une modification d'une impédance caractéristique de chaque groupe de cellules électriquement connectées,
- un module de configuration (6) des interconnexions des connecteurs (24), le module de configuration (6) étant propre à modifier au cours du temps la première configuration pour obtenir au moins une deuxième configuration de la surface d'interconnexion (4),
**caractérisé en ce que** le module de configuration (6) est propre à modifier la configuration de la surface d'interconnexion (4) lorsqu'une tentative d'intrusion est détectée par le module de détection (8), lorsqu'une rupture de la continuité électrique d'au moins un circuit continu est détectée sur une zone d'une surface de maillage (2), le module de configuration (6) étant propre à modifier la configuration de la surface d'interconnexion (4) de sorte à augmenter le nombre de groupes de cellules connectées présentes dans la zone.

2. Système (1) selon la revendication 1, dans lequel le module de configuration (6) est propre à déterminer de manière aléatoire la deuxième configuration parmi une pluralité de configurations de la surface d'interconnexion (4) et à reconfigurer l'ensemble des interconnexions des connecteurs (24) selon la deuxième configuration.

3. Système (1) selon la revendication 1 ou 2, dans lequel le système (1) comprend au moins deux surfaces de maillage (2) et un module de mesure de variations d'une grandeur entre deux des surfaces de maillage (2), la grandeur étant choisie parmi une impédance, une résistance, une capacitance et une inductance.

4. Système (1) selon l'une quelconque des revendications 1 à 3, dans lequel au moins un circuit électrique est formé par la connexion non reconfigurable par le module de configuration (6), d'au moins deux cellules (3) adjacentes d'une surface de maillage (2) via un composant préalablement configuré de façon statique.

5. Système (1) selon l'une quelconque des revendications 1 à 4, dans lequel le module de configuration (6) est propre à déplacer au cours du temps, sur une ou sur chaque surface de maillage (2), une zone de la surface de maillage (2) présentant le nombre de groupes de cellules connectées le plus élevé.

6. Système (1) selon l'une quelconque des revendications 1 à 5, dans lequel le système (1) comprend un organe propre à activer à des instants choisis aléatoirement ou pseudo-aléatoirement le module de configuration (6) et/ou le module de détection (8).

7. Système (1) selon l'une quelconque des revendications 1 à 6, dans lequel la surface d'interconnexion (4) comprend un composant programmable, le module de configuration (6) et le module de détection (8) étant des applications logicielles intégrées dans le composant programmable.

8. Système (1) selon l'une quelconque des revendications 1 à 6, dans lequel la surface d'interconnexion (4) comprend un microsystème électromécanique piloté par des actuateurs, le module de configuration (6) étant propre à actionner les actuateurs.

9. Système (1) selon l'une quelconque des revendications 1 à 8, dans lequel la surface de maillage (2) et la surface d'interconnexion (4) forment une barrière de protection physique pour le module de configuration (6) et pour le module de détection (8).

10. Système (1) selon l'une quelconque des revendications 1 à 9, dans lequel, après détection d'une rupture de la continuité électrique d'un groupe de cellules connectées, le module de détection (8) est propre à appliquer une politique de sécurité, la politique de sécurité comprenant l'effacement de données sensibles, la mise en oeuvre de tests d'intégrité et/ou la reconfiguration des interconnexions des connecteurs (24) de la surface d'interconnexion (4).

11. Système (1) selon l'une quelconque des revendications 1 à 10, dans lequel le module de détection (8) inclut plusieurs méthodes de détection de la rupture ou de l'altération de chaque groupe de cellules électriquement connectées et est propre à les utiliser de façon combinée selon un entrelacement temporel défini, pseudo-aléatoire ou aléatoire.

12. Procédé de détection d'intrusions, le procédé comprenant les étapes de :
- fourniture (100) d'un système (1) de détection d'intrusions selon l'une quelconque des revendications 1 à 11,
- détermination (110) par le module de configuration (6) d'une première configuration de la surface d'interconnexion (4),
- configuration (120) par le module de configuration (6) des interconnexions des connecteurs (24) de la surface d'interconnexion (4) selon la première configuration déterminée,
- activation (130) du module de détection (8) pour détecter une modification d'une impédance caractéristique de chaque groupe de cellules électriquement connectées,
- détection (140) éventuelle par le module de détection (8) d'une modification d'une impédance caractéristique d'un groupe de cellules électriquement connectées, et
- modification de la première configuration de la surface d'interconnexion (4) par le module de configuration (6) pour interconnecter les connecteurs (24) de la surface d'interconnexion (4) selon une deuxième configuration, la modification de la configuration de la surface d'interconnexion (4) étant réalisée lorsqu'une tentative d'intrusion est détectée par le module de détection (8), lorsqu'une rupture de la continuité électrique d'au moins un circuit continu est détectée sur une zone d'une surface de maillage (2), la configuration de la surface d'interconnexion (4) étant modifiée de sorte à augmenter le nombre de groupes de cellules connectées présentes dans la zone.

## Patentansprüche

1. System (1) zur Erfassung eines Eindringens für den Schutz einer Einrichtung, über welche sensible Informationen laufen, wobei das System (1) aufweist:
- mindestens eine Netzfläche (2), wobei jede Netzfläche (2) mindestens zwei Zellen (3) aufweist, wobei jede Zelle (3) ein Muster (3) aufweist, wobei ein Muster (20) ein Abschnitt eines kontinuierlichen elektrischen Schaltkreises ist,
- mindestens eine Verbindungsfläche (4), welche eine Mehrzahl von Verbindern (24) aufweist, wobei die Verbinder (24) dazu geeignet sind, die Zellen (3) der Netzfläche oder der Netzflächen (2) gemäß einer ersten Konfiguration der Verbindungsfläche (4) miteinander zu verbinden, um Gruppen von elektrisch verbundenen Zellen (3) zu bilden, wobei die Muster (20) der Zellen (3) jeder Gruppe einen kontinuierlichen elektrischen Schaltkreis von Mustern (20) bilden,
- ein Erfassungsmodul (8), welches dazu geeignet ist, eine Modifizierung einer charakteristischen Impedanz jeder Gruppen von elektrisch verbundenen Zellen (3) zu erfassen,
- ein Konfigurationsmodul (6) zum Miteinanderverbinden der Verbinder (24), wobei das Konfigurationsmodul (6) dazu geeignet ist, im Lauf der Zeit die erste Konfiguration zu modifizieren, um mindestens eine zweite Konfiguration der Verbindungsfläche (4) zu erlangen,
**gekennzeichnet dadurch, dass** das Konfigurationsmodul (6) dazu geeignet ist, die Konfiguration der Verbindungsfläche (4) zu modifizieren, wenn ein Eindringungsversuch durch das Erfassungsmodul (8) erfasst wird, wenn eine Durchtrennung der elektrischen Kontinuität von mindestens einem kontinuierlichen Schaltkreis in einem Bereich einer Netzfläche (2) erfasst wird, wobei das Konfigurationsmodul (6) dazu geeignet ist, die Konfiguration der Verbindungsfläche (4) derart zu modifizieren, dass die Anzahl an Gruppen von verbundenen Zellen, welche in dem Bereich vorhanden sind, erhöht wird.

2. System (1) gemäß dem Anspruch 1, wobei das Konfigurationsmodul (6) dazu geeignet ist, auf zufällige Weise die zweite Konfiguration aus einer Mehrzahl von Konfigurationen der Verbindungsfläche (4) zu ermitteln und die Menge an Verbindungen der Verbinder (24) gemäß der zweiten Konfiguration zu rekonfigurieren.

3. System (1) gemäß dem Anspruch 1 oder 2, wobei das System (1) mindestens zwei Netzflächen (2) und ein Modul zum Messen von Veränderungen einer Größe zwischen den zwei Netzflächen (2) aufweist, wobei die Größe aus einer Impedanz, einem Widerstand, einer Kapazität und einer Induktivität ausgewählt ist.

4. System (1) gemäß irgendeinem der Ansprüche 1 bis 3, wobei mindestens ein elektrischer Schaltkreis durch die nicht durch das Konfigurationsmodul (6) rekonfigurierbare Verbindung gebildet ist aus mindestens zwei benachbarten Zellen (3) einer Netzfläche (2) mittels eines im Voraus statisch konfigurierten Bauteils.

5. System (1) gemäß irgendeinem der Ansprüche 1 bis 4, wobei das Konfigurationsmodul (6) dazu geeignet ist, im Lauf der Zeit auf einer oder jeder Netzfläche (2) einen Bereich der Netzfläche (2), welcher die höchste Anzahl an Gruppen von verbundenen Zellen aufweist, zu verschieben.

6. System (1) gemäß irgendeinem der Ansprüche 1 bis 5, wobei das System (1) ein Organ aufweist, welches dazu geeignet ist, zu zufällig oder pseudo-zufällig ausgewählten Zeitpunkten das Konfigurationsmodul (6) und/oder das Erfassungsmodul (8) zu aktivieren.

7. System (1) gemäß irgendeinem der Ansprüche 1 bis 6, wobei die Verbindungsfläche (4) ein programmierbares Bauteil aufweist, wobei das Konfigurationsmodul (6) und das Erfassungsmodul (8) in das programmierbare Bauteil integrierte Softwareanwendungen sind.

8. System (1) gemäß irgendeinem der Ansprüche 1 bis 6, wobei die Verbindungsfläche (4) ein elektromechanisches Mikrosystem aufweist, welches mittels Aktuatoren gesteuert wird, wobei das Konfigurationsmodul (6) dazu eingerichtet ist, die Aktuatoren zu betätigen.

9. System (1) gemäß irgendeinem der Ansprüche 1 bis 8, wobei die Netzfläche (2) und die Verbindungsfläche (4) eine physische Schutzbarriere für das Konfigurationsmodul (6) und für das Erfassungsmodul (8) bilden.

10. System (1) gemäß irgendeinem der Ansprüche 1 bis 9, wobei das Erfassungsmodul (8), nach der Erfassung einer Durchtrennung der elektrischen Kontinuität einer Gruppe der verbundenen Zellen, dazu geeignet ist, ein Sicherheitskonzept anzuwenden, wobei das Sicherheitskonzept das Löschen von sensiblen Daten, das Durchführen von Integritätsüberprüfungen und/oder die Rekonfiguration der Verbindungen der Verbinder (24) der Verbindungsfläche (4) aufweist.

11. System (1) gemäß irgendeinem der Ansprüche 1 bis 10, wobei das Erfassungsmodul (8) mehrere Methoden zur Erfassung der Durchtrennung oder Veränderung einer jeden Gruppe von elektrisch verbundenen Zellen aufweist und dazu geeignet ist, diese auf kombinierte Weise gemäß einer definierten, pseudo-zufälligen oder zufälligen zeitlichen Verschachtelung zu verwenden.

12. Verfahren zur Erfassung eines Eindringens, das Verfahren aufweisend die Schritte des:
- Bereitstellens (100) eines Systems (1) zur Erfassung eines Eindringens gemäß irgendeinem der Ansprüche 1 bis 11,
- Ermittelns (110), mittels des Konfigurationsmoduls (6), einer ersten Konfiguration der Verbindungsfläche (4),
- Konfigurierens (120), mittels des Konfigurationsmoduls (6), der Verbindungen der Verbinder (24) der Verbindungsfläche (4) gemäß der ermittelten ersten Konfiguration,
- Aktivierens (130) des Erfassungsmoduls (8) zum Erfassen einer Modifizierung einer charakteristischen Impedanz von jeder Gruppe von elektrisch miteinander verbundenen Zellen,
- eventuellen Erfassens (140), durch das Erfassungsmodul (8), einer Modifizierung einer charakteristischen Impedanz einer Gruppe von elektrisch miteinander verbundenen Zellen, und
- Modifizierens der ersten Konfiguration der Verbindungsfläche (4) durch das Konfigurationsmodul (6) zum Miteinanderverbinden der Verbinder (24) der Verbindungsfläche (4) gemäß einer zweiten Konfiguration, wobei das Modifizieren der Konfiguration der Verbindungsfläche (4) umgesetzt wird, wenn ein Eindringungsversuch durch das Erfassungsmodul (8) erfasst wird, wenn eine Durchtrennung der elektrischen Kontinuität des mindestens einen kontinuierlichen Schaltkreises in einem Bereich einer Netzfläche (2) erfasst wird, wobei die Konfiguration der Verbindungsfläche (4) derart modifiziert wird, dass die Anzahl an Gruppen von verbundenen, in dem Bereich vorhandenen Zellen erhöht wird.

## Claims

1. An intrusion detection system (1), for protecting an equipment through which sensitive information passes, the system (1) comprising:
- at least one mesh surface (2), each mesh surface (2) comprising at least two cells (3), each cell (3) comprising a pattern (20), a pattern (20) being a portion of continuous electrical circuit,
- at least one interconnection surface (4) comprising a plurality of connectors (24), the connectors (24) being suitable for connecting cells (3) of the mesh surface(s) (2) to each other according to a first configuration of the interconnection surface (4) for forming groups of electrically connected cells (3), the patterns (20) of the cells (3) of each group forming a continuous electrical circuit of patterns (20),
- a detection module (8) able to detect a modification of an impedance which is characteristic of each group of electrically connected cells,
- a module (6) for configuring interconnections of the connectors (24), the configuration module (6) being able to modify, over time, the first configuration to obtain at least one second configuration of the interconnection surface (4),
**characterized in that** the configuration module (6) is able to modify the configuration of the interconnection surface (4) when an intrusion attempt is detected by the detection module (8), when a break in the electrical continuity of at least one continuous circuit is detected over an area of a mesh surface (2), the configuration module (6) being able to modify the configuration of the interconnection surface (4) so as to increase the number of groups of connected cells present **in that** area.

2. The system (1) according to claim 1, wherein the configuration module (6) is able to determine, randomly, the second configuration from among a plurality of configurations of the interconnection surface (4) and to reconfigure the set of interconnections of the connectors (24) according to the second configuration.

3. The system (1) according to claim 1 or 2, wherein the system (1) comprises at least two mesh surfaces (2) and a module for measuring variations in a property between two of the mesh surfaces (2), the property being chosen from among an impedance, a resistance, a capacitance and an inductance.

4. The system (1) according to any one of claims 1 to 3, wherein at least one electrical circuit is formed by the connection, which is not reconfigurable by the configuration module (6), of at least two adjacent cells (3) of a mesh surface (2) via a component previously statically configured.

5. The system (1) according to any one of claims 1 to 4, wherein the configuration module (6) is able to move over time, over one or over each mesh surface (2), a zone of the mesh surface (2) having the highest number of groups of connected cells.

6. The system (1) according to any one of claims 1 to 5, wherein the system (1) comprises a member able to activate, at randomly or pseudo-randomly chosen moments, the configuration module (6) and/or the detection module (8).

7. The system (1) according to any one of claims 1 to 6, wherein the interconnection surface (4) comprises a programmable component, the configuration module (6) and the detection module (8) being software applications integrated into the programmable component.

8. The system (1) according to any one of claims 1 to 6, wherein the interconnection surface (4) comprises a micro-electromechanical system piloted by actuators, the configuration module (6) being able to actuate the actuators.

9. The system (1) according to any one of claims 1 to 8, wherein the mesh surface (2) and the interconnection surface (4) form a physical protective barrier for the configuration module (6) and the detection module (8).

10. The system (1) according to any one of claims 1 to 9, wherein, after a break has been detected in the electrical continuity of a group of connected cells, the detection module (8) is able to apply a security policy, the security policy comprising erasing sensitive data, carrying out integrity tests and/or reconfiguring interconnections of the connectors (24) of the interconnection surface (4).

11. The system (1) according to any one of claims 1 to 10, wherein the detection module (8) includes several methods for detecting a break or alteration of each group of electrically connected cells and is able to use them in a combined manner with a defined temporal interleaving, which may be pseudo-random or random.

12. An intrusion detection method, the method comprising the following steps:
- providing (100) a system (1) for detecting intrusions according to any one of claims 1 to 11,
- determining (110), using the configuration module (6), a first configuration of the interconnection surface (4),
- configuring (120), using the configuration module (6), interconnections of the connectors (24) of the interconnection surface (4) according to the first determined configuration,
- activating (130) the detection module (8) to detect a modification of an impedance which is characteristic of each group of electrically connected cells,
- optionally detecting (140), via the detection module (8), a modification of an impedance which is characteristic of a group of electrically connected cells, and
- modifying the first configuration of the interconnection surface (4), using the configuration module (6), to interconnect the connectors (24) of the interconnection surface (4) according to a second configuration, the modification of the configuration of the interconnection surface (4) being achieved when a break in the electrical continuity of at least one continuous circuit is detected over an area of a mesh surface (2), the configuration of the interconnection surface (4) being modify so as to increase the number of groups of connected cells present in that area.
